# EUROPÄISCHE PATENTSCHRIFT

(11) **EP 3 199 803 B1**
(45) Veröffentlichungstag und Bekanntmachung des Hinweises auf die Patenterteilung: **28.03.2018**
(21) Anmeldenummer: 16153632.1
(22) Anmeldetag: 01.02.2016
(51) Int. Cl.: F03D 5/06, F03D 9/32

(54) **OFFSHORE-HÖHENWINDKRAFTANLAGE**
OFFSHORE TALL WIND POWER INSTALLATION
ÉOLIENNE OFFSHORE

(43) Veröffentlichungstag der Anmeldung: 02.08.2017
(73) Patentinhaber: IMPaC Offshore Engineering GmbH, 20354 Hamburg (DE)
(72) Erfinder: Strieker, Thomas, 33415 Verl (DE)
(74) Vertreter: Uexküll & Stolberg

(56) Entgegenhaltungen:
- US-A1- 2015 183 512
- US-A1- 2015 356 482

## Beschreibung

Die vorliegende Erfindung betrifft eine Offshore-Höhenwindkraftanlage zur Energiegewinnung mit einem Fluggerät, das in einem ersten Betriebsmodus beim Abfliegen von geschlossenen Flugmustern ein Zugseil von einer Winde eines Generatorsystems auf einer schwimmfähigen Basisstation abwickelt. Die Basisstation ist wiederum über eine Verbindungsleitung elektrisch mit einer Sammelleitung am Meeresboden verbunden. Beim Abwickeln des Zugseils von der Winde wandelt der damit verbundene Generator des Generatorsystems die Drehbewegung der Winde in eine andere Energieform um, welche über die Verbindungsleitung an die Sammelleitung abgeführt wird. Das Fluggerät ist zudem mit einem Propellersystem ausgestattet, welches das Fluggerät im Flug aktiv vorantreiben kann.

Regenerative Energieerzeugungssysteme wie z.B. Photovoltaik, Gezeitenkraftwerke oder auch Windkraftanlagen gewinnen seit Jahren an Bedeutung. Letztere Windkraftanlagen werden typischerweise in Form von hohen Türmen mit großen Rotorköpfen realisiert. Diese konventionellen, erdgebundenen Windkraftanlagen sind aufgrund ihrer Bauart sehr kostenintensiv. Zudem nutzen diese Windkraftanlagen Winde in Höhen aus, die aufgrund der Nähe zum Erdboden wenig beständig sind. Im Gegensatz dazu sind Winde in größeren Höhen im Bereich von einigen hundert Metern aufgrund der geringeren Bodenreibung wesentlich beständiger und energiereicher als bodennahe Winde. Diese sogenannten Höhenwinde sind von konventionellen Windkraftanlagen nicht zu einem angemessenen Einsatz von Ressourcen zu erreichen.

Im Gegensatz zu konventionellen Windkraftanlagen können Höhenwindkraftanlagen diese energiereichen Höhenwinde nutzbar machen. Bei einer Höhenwindkraftanlage findet die Ankopplung an den Wind durch ein fliegendes Element statt, das z.B. mit einem sich auf einer Winde am Boden befindlichen Zugseil oder einer Leitung verbunden ist. Beispiele für solche Systeme werden z.B. in DE 20 2006 005 389 U1 in Form eines Flugdrachens, und in EP 2 631 468 A1 in Form eines Gleiters gelehrt.

In beiden Beispielen erfolgt die Energieerzeugung ähnlich. Das Fluggerät hat Flugeigenschaften, die eine Zunahme in der Flughöhe bei einem geeigneten Kurs zum Wind allein mit Hilfe des Winds erlauben. Das Fluggerät fliegt Muster, bei denen es zunehmend an Höhe gewinnt. Durch das Ansteigen des Fluggerätes wird ein Zugseil, das auf einer Winde aufgerollt und mit dem das Fluggerät verbunden ist, von der Winde abgerollt. Die Abrollbewegung wird durch einen mit der Winde verbundenen Generator in eine andere Energieform umgewandelt. Diese andere Energieform kann z.B. elektrische Energie, Hubenergie, chemische Energie oder auch die Produktion von Wasserstoff sein. Hat das Fluggerät seine maximale Höhe erreicht, begibt es sich auf eine niedrigere Flughöhe. Das Flugmanöver ist so gewählt, dass beim Abstieg das Zugseil unter einem geringeren Einsatz von Energie als zum Abrollen nötig wieder auf die Winde aufgerollt wird. Die gewonnene Energie ist die Differenz zwischen der beim Abrollen des Zugseils gewonnenen Energie und der zum Aufrollen des Zugseils verwendeten Energie.

Ein möglicher Einsatzort derartiger Höhenwindkraftanlagen ist das Meer, z.B. in Küstengebieten oder auf hoher See (Offshore). Ein Nachteil der Stationierung der Anlagen auf dem Meer ist die wesentlich aufwendigere Wartung als am Festland, da Wartungspersonal entweder mit dem Schiff oder auf dem Luftweg im Wartungsfall zu der Anlage gebracht werden muss. Bei einer Stationierung der Anlagen auf dem Meer ist daher z.B. eine einfache Wartung der Fluggeräte wünschenswert.

Die US 2015/0183512 A1 beschreibt ein Verfahren und Systeme zur Überführung eines Luftfahrzeuges zwischen Kreuzwindflug und Schwebeflug. Ein Fluggerät mit starren Flügeln ist über ein Zugseil mit einer Bodenstation gekoppelt, die das Fluggerät sowohl beim Starten als auch beim Landen unterstützt. Eine Vielzahl von Rotoren ist an Bord des Fluggerätes vorgesehen. Die Rotoren sind dazu ausgebildet, Generatoren an Bord des Fluggerätes anzutreiben und elektrische Energie zu gewinnen. Das Zugseil ist dazu eingerichtet, die elektrische Energie an die Bodenstation zu übertragen.

Es ist die Aufgabe der vorliegenden Erfindung eine Offshore-Höhenwindkraftanlage bereitzustellen, die eine einfache Wartung besonders der Fluggeräte vorsieht.

Diese Aufgabe wird erfindungsgemäß durch eine Offshore-Höhenwindkraftanlage nach Anspruch 1 gelöst. Vorteilhafte Ausgestaltungen der Erfindung ergeben sich aus den Unteransprüchen.

Demnach weist eine erfindungsgemäße Offshore-Höhenwindkraftanlage ein Fluggerät auf, das dazu eingerichtet ist, in einem zweiten Betriebsmodus von dem Zugseil abgekoppelt eine festgelegte Flugstrecke abzufliegen und an mindestens einem festgelegten Ziel landen zu können, wobei mindestens eines der Ziele eine von der Basisstation räumlich getrennte Wartungsstation ist.

Durch die erfindungsgemäße Offshore-Höhenwindkraftanlage ist somit eine Wartung des Fluggerätes z.B. an einer sich am Festland befindlichen Wartungsstation möglich. Dadurch wird der Wartungsaufwand im Wesentlichen auf die technische Wartung selbst reduziert. Der Zugang zur Wartungsstation für das Wartungspersonal ist stark vereinfacht. Auch ist die Nutzung einer zentralen Wartungsstation von mehreren, an unterschiedlichen Orten stationierten Fluggeräten möglich, wodurch die zur Wartung benötigten Ressourcen minimiert werden. Für den Flug des Fluggeräts zur Wartungsstation, d.h. den Streckenflug, ist eine stabile Struktur zur Erfüllung der gesetzlichen Zulassungsbedingungen notwendig. Zudem besitzt das Fluggerät für einen effizienten Streckenflug eine hohe aerodynamische Güte mit einer entsprechend hohen Gleitzahl. Dadurch kann das Fluggerät während des Streckenflugs nur von einem Teil des Propellersystems angetrieben werden, was zu einer großen Reichweite führt.

In einer Ausführungsform der Erfindung ist das Fluggerät in seinem zweiten Betriebsmodus weiter dazu eingerichtet, abgekoppelt vom Zugseil fliegen zu können und selbstständig von der Wartungsstation zu einer Basisstation fliegen und darauf landen zu können. Diese Fähigkeit ermöglicht den selbstständigen Rückflug des Fluggeräts nach einer Wartung zur Basisstation auf dem Meer. Der selbstständige Rückflug zur Basisstation kann z.B. durch eine autarke Flugsteuereinheit mit einer GPS-gestützten Zielführung an Bord des Fluggerätes erfolgen. In einem weiteren Beispiel kann entweder die Basisstation und/oder die Wartungsstation eine Flugsteuereinheit aufweisen, die über eine Funkverbindung zum Fluggerät die Flugmanöver des Fluggeräts unter Verwendung der GPS-Position des Fluggeräts und der GPS-Position der Basisstation kontrolliert. In einem weiteren Beispiel kann über eine Funkverbindung zu einer durch Wartungspersonal besetzten Bodenkontrollstation das Fluggerät ferngesteuert ebenfalls unter Verwendung der GPS-Positionen des Fluggeräts und der Basisstation geflogen und dort gelandet bzw. gestartet werden.

In einer Ausführungsform der Erfindung sind das Fluggerät und die Basisstation eingerichtet, selbstständig eine Verbindung zwischen dem Fluggerät und dem Zugseil des Generatorsystems der Basisstation herstellen zu können, wenn das Fluggerät die Basisstation erreicht. Die Herstellung der Verbindung kann z.B. durch die Aufnahme des Zugseils durch einen Fanghaken am Fluggerät während eines nahen Vorbeiflugs des Fluggeräts an der Basisstation erfolgen. Es ist auch eine Landung des Fluggeräts auf der Basisstation denkbar, bei oder nach der die Verbindung zum Zugseil automatisch hergestellt wird.

In einer Ausführungsform der Erfindung sind die Propellerblätter des Propellersystems während des Fluges einklappbar. Durch diese Fähigkeit verringert sich beim Einklappen der Luftwiderstand und die aerodynamischen Eigenschaften des Fluggeräts werden verbessert, was besonders im ersten Betriebsmodus bei der Energieproduktion und im zweiten Betriebsmodus z.B. beim effizienten Streckenflug von Bedeutung ist. Zum Beispiel können die Propellerblätter im ersten Betriebsmodus vollständig eingeklappt werden, wohingegen im zweiten Betriebsmodus die ausgeklappten Propellerblätter mindestens eines Propellers für den Vortrieb des Fluggerätes sorgen. Im dritten Betriebsmodus können die Propellerblätter aller Propeller ausgeklappt werden, so dass das Fluggerät nahezu senkrecht starten, landen und manövrieren kann, vergleichbar mit der Flugart eines Quadrokopters bzw. einem VTOL-Flugmodus (Vertical Take-Off and Landing).

In einer Ausführungsform der Erfindung ist das Fluggerät so eingerichtet, dass es in einem dritten Betriebsmodus, einem VTOL-Betriebsmodus (Vertical Take-Off and Landing), in einer vertikalen oder nahezu vertikalen Richtung fliegen, landen und manövrieren kann. Durch diesen Betriebsmodus ist ein Landen und Starten auf engem Raum möglich. Es werden keine großen Landeplätze benötigt. Dies ist besonders von Bedeutung, wenn das Fluggerät auf der Basisstation oder der Wartungsstation z.B. in einem windgeschützten Bereich oder einem Fangnetz landen oder starten soll. Durch diese Fähigkeit des Fluggeräts ist es auch möglich, dass sich die Wartungsstation an Bord eines Schiffes befindet. Eine schwimmfähige Wartungsstation ist zum Beispiel bei der Verwendung der Offshore-Höhenwindkraftanlage auf hoher See denkbar. In diesem Fall kann eine Wartungsstation mit dem Schiff in die Nähe von einer oder mehrerer Offshore-Höhenwindkraftanlagen gebracht werden, um so die Flugzeit der Fluggeräte von der jeweiligen Basisstation zur Wartungsstation zu verkürzen und die Zeit, in der keine Energieerzeugung stattfindet, zu minimieren. Gleichzeitig wäre nur eine Wartungsstation für die Wartung von mehreren Fluggeräten nötig.

In einer Ausführungsform der Erfindung ist die Verbindungsleitung an ihrem basisstationsseitigen Ende in einen Kupplungskörper geführt. Zudem weist die Basisstation eine Aufnahmevorrichtung auf, die zur Aufnahme und Fixierung mindestens eines Teils des Kupplungskörpers geeignet ist. Diese lösbare Verbindung aus Kupplungskörper und Aufnahmevorrichtung zwischen der Verbindungsleitung und Basisstation ermöglicht einen einfachen Anschluss der Basisstation an die Verbindungsleitung sowie den einfachen Austausch der Basisstation der Offshore-Höhenwindkraftanlage z.B. zu Wartungszwecken. Beispielsweise kann bei einem Einsatz der Offshore-Höhenwindkraftanlage auf hoher See die Basisstation durch eine neue Basisstation ausgetauscht werden. Während der Austausch stattfindet, kann z.B. das Fluggerät vom Zugseil abgekoppelt in seinem zweiten Betriebsmodus über der Basisstation fliegen. Die Abkopplung vom Zugseil kann z.B. durch das Öffnen eines Hakens am Fluggerät erfolgen. Nachdem der Tausch der Basisstation beendet ist und die neue Basisstation den Kupplungskörper in ihrer Aufnahmevorrichtung aufgenommen hat, stellt das Fluggerät z.B. selbstständig die Verbindung zum Zugseil her und kehrt in seinen ersten Betriebsmodus zur Energieproduktion zurück. Die zu wartende ausgetauschte Basisstation kann dann z.B. ans Festland geschleppt werden oder selbstständig fahren. Ein weiteres Anwendungsbeispiel dieser lösbaren Verbindung zwischen Kupplungskörper und Aufnahmevorrichtung ist die Fähigkeit der Basisstation sich von der Verbindungsleitung im Fall von Sturm und/oder hohen Wellengang abkoppeln zu können.

In einer Ausführungsform der Erfindung ist durch die Aufnahme des Kupplungskörpers in der Aufnahmevorrichtung der Basisstation eine leitende Verbindung zwischen der Verbindungsleitung und der Basisstation hergestellt. Diese leitende Verbindung kann z.B. im Fall einer elektrischen Verbindung ein Schleifkontakt zwischen einem elektrisch leitenden Teil des Kupplungskörpers, der mit der Verbindungsleitung verbunden ist, und einem elektrisch leitenden Teil der Basisstation, der mit dem Generatorsystem verbunden ist, sein. Auch weitere Verbindungsarten, die eine verlustfreie oder verlustarme Übertragung der Energieform von der Basisstation an die Verbindungsleitung gewährleisten, sind denkbar.

In einer Ausführungsform der Erfindung ist der Kupplungskörper zweigeteilt mit einem Kupplungskörperoberteil, der die Verbindung zwischen der Verbindungsleitung und der Basisstation herstellt, und einem Kupplungskörperunterteil, das über eine Haltevorrichtung am Meeresboden verankert ist, wobei das Kupplungskörperoberteil gegen das Kupplungskörperunterteil frei drehbar ist. Durch diese Zweiteilung kann sich die Basisstation frei gegenüber der am Boden befestigten Verbindungsleitung drehen. Eine freie Drehbarkeit der Basisstation kann z.B. bei sich drehenden Höhenwinden notwendig sein, um stets eine möglichst direkte Verbindungslinie zwischen dem Windenausgang und dem Fluggerät zur optimalen Abroll- und Aufrollbewegung zu gewährleisten. Durch den zweiteiligen Kupplungskörper wird zudem eine übermäßige Verwindung der Verbindungsleitung vermieden, was ansonsten zu einem Bruch der Verbindungsleitung führen kann. Die Haltevorrichtung mit der das Kupplungskörperunterteil am Meeresboden verankert ist, kann z.B. über Seile, die z.B. Polyethylen, Polyethylen-Fasern mit ultrahoher molarer Masse und/oder Stahl aufweisen, oder über Ketten realisiert sein. Eine Verankerung des Kupplungskörperunterteils nimmt etwaige Zugkräfte von der Verbindungsleitung. Dies führt zu einer deutlich längeren Lebensdauer der Verbindungsleitung, da eine Materialermüdung durch übermäßige mechanische Belastung verringert wird. Zudem wird die Position der Basisstation stabilisiert, wodurch die Basisstation eine im Bezug zum Fluggerät verbesserte Widerlagereigenschaft aufweist.

In einer Ausführungsform der Erfindung weist die Haltevorrichtung mindestens ein Halteseil auf.

In einer Ausführungsform der Erfindung weist das Zugseil Polyethylen-Fasern mit ultrahoher molarer Masse auf, die dem Fachmann als Dyneema® bekannt sind. Dyneema-Fasern zeichnen sich durch hohe Zugfestigkeitswerte, eine hohe Beständigkeit gegen Abrieb und ein geringes Gewicht aus. Diese Eigenschaften sind für den Einsatz in einem Zugseil vorteilhaft.

In einer Ausführungsform der Erfindung weist die Basisstation ein Energiespeicherelement auf, das mit dem Generator des Generatorsystems und der Verbindungsleitung verbunden ist, und das dazu eingerichtet ist, die vom Generator umgewandelte Energie zwischenzuspeichern. Durch die Zwischenspeicherung der aus der mechanischen Energie der Drehbewegung umgewandelten Energie ist es möglich, den zeitlichen Verlauf der Energie, die in die Sammelleitung eingespeist wird, zu beeinflussen.

Beispielsweise kann durch die Zwischenspeicherung aus einer diskontinuierlichen Energieeinspeisung eine kontinuierliche Energieeinspeisung werden.

Die vorliegende Erfindung wird im Folgenden anhand von lediglich Ausführungsbeispiele zeigenden Zeichnungen erläutert, wobei
- Fig. 1: eine Offshore-Höhenwindkraftanlage in einer seitlichen Schnittansicht zeigt,
- Fig. 2: eine perspektivische Ansicht der Offshore-Höhenwindkraftanlage bei der Energiegewinnung zeigt,
- Fig. 3: eine perspektivische Ansicht eines Fluggerätes beim Streckenflug,
- Fig. 4: eine perspektivische Ansicht eines Fluggerätes beim Starten oder Landen im dritten Betriebsmodus zeigt,
- Fig. 5: eine perspektivische Ansicht dreier unterschiedlicher Flugphasen im dritten VTOL-Betriebsmodus, wobei A) das Fluggerät beim Übergang vom horizontalen Flug in den vertikalen VTOL-Flug zeigt, B) das Fluggerät im vertikalen VTOL-Flug zeigt und C) das auf dem Boden gelandete Fluggerät zeigt,
- Fig. 6: eine perspektivische Ansicht eines Propellers mit einklappbaren Propellerblättern A) im eingeklappten Zustand und B) im ausgeklappten Zustand zeigt,
- Fig. 7: eine perspektivische Ansicht eines Fluggerätes beim An- oder Abkoppeln des Fluggerätes an oder von einem Haltearm z.B. einer Wartungsstation zeigt.

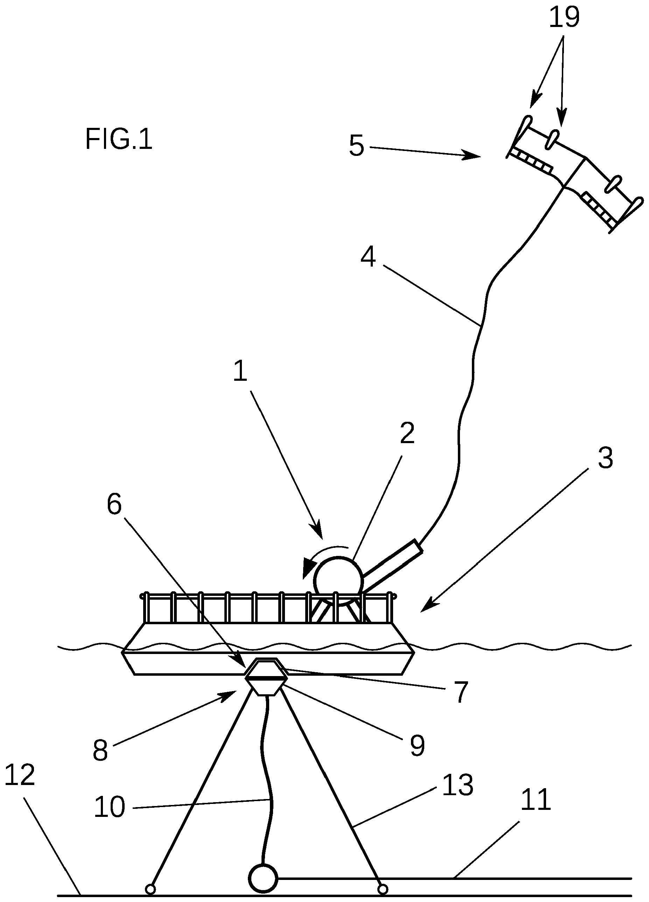

Wie aus Fig. 1 hervorgeht, ist ein Generatorsystem 1 mit einer Winde 2 auf einer schwimmenden Basisstation 3 über ein Zugseil 4 mit einem Fluggerät 5 verbunden. Die Basisstation 3 weist eine Aufnahmevorrichtung 6 auf, in der ein Kupplungskörperoberteil 7 eines zweiteiligen Kupplungskörpers 8 aufgenommen ist. Ein Kupplungskörperunterteil 9 des zweiteiligen Kupplungskörpers 8 ist über eine Verbindungsleitung 10 mit einer Sammelleitung 11, die sich am Meeresboden 12 befindet, z.B. elektrisch verbunden. Desweiteren ist das Kupplungskörperunterteil 9 über Halteseile 13 am Meeresboden 12 verankert.

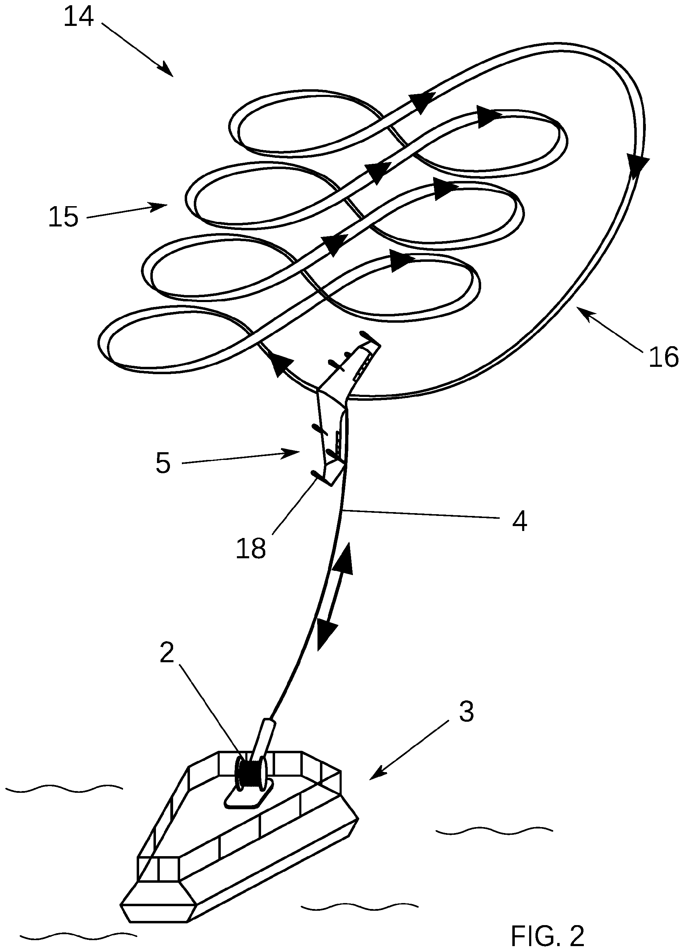

Fig. 2 zeigt die Offshore-Höhenwindkraftanlage bei der Energiegewinnung. Das Fluggerät 5 kann mit hohen Geschwindigkeiten z.B. im Bereich von 100 bis 400 km/h fliegen, um so eine Leistung bei der Energiegewinnung im Megawattbereich zu erreichen. Um diesen hohen Geschwindigkeiten standzuhalten ist das Fluggerät 5 stabil gebaut und weist eine hohe aerodynamische Güte sowie eine hohe Gleitzahl auf. Das Fluggerät 5 befindet sich in Fig. 2 im ersten Betriebsmodus. In diesem Betriebsmodus fliegt es ein geschlossenes Flugmuster 14 bestehend aus einem Steigflug 15, z.B. in Form von liegenden Achten oder Kreisbahnen, und einem direkten Sinkflug 16. Um die für das Fliegen des Flugmusters 14 notwendige Ausgangshöhe und Ausgangsgeschwindigkeit zu erreichen, wird das Propellersystem 19, das z.B. mit Elektromotoren betrieben werden kann, verwendet. Hat das Fluggerät 5 die für das Fliegen des Flugmusters 14 notwendigen Werte für die minimale Ausgangshöhe und Ausgangsgeschwindigkeit, wird das Propellersystem 19 abgeschaltet und die Propellerblätter 17 eingeklappt. Im Steigflug 15 wird der Höhenanstieg des Fluggeräts 5 allein durch seine Gleitflugeigenschaften in Kombination mit einem geeigneten Kurs zu den Höhenwinden erreicht. Während das Fluggerät 5 zunehmend an Höhe gewinnt, wickelt es das Zugseil 4 von der Winde 2 des Generatorsystems 1 auf der Basisstation 3 ab. Die durch das Abwickeln entstandene Drehbewegung der Winde 2 wird in einem Generator in eine andere Energieform umgewandelt. Hat das Fluggerät 5 den höchsten Punkt des Flugmusters 14 erreicht, begibt es sich in den Sinkflug 16 zum tiefsten Punkt des Flugmusters. Während des Sinkflugs 16 wird das zuvor abgewickelte Zugseil 4 vom Generatorsystem 1, das jetzt als Motor arbeitet, wieder eingeholt. Durch die im Unterschied zum Steigflug 15 geringere Zugspannung auf dem Zugseil 4 ist der Energieeinsatz beim Aufrollen des Zugseils 4 minimal. Die während eines geschlossenen Flugmusters 14 gewonnene Energie ist die Differenz aus der beim Abwickeln des Zugseils 4 gewonnenen Energie und der für das Aufrollen des Zugseils 4 benötigten Energie.

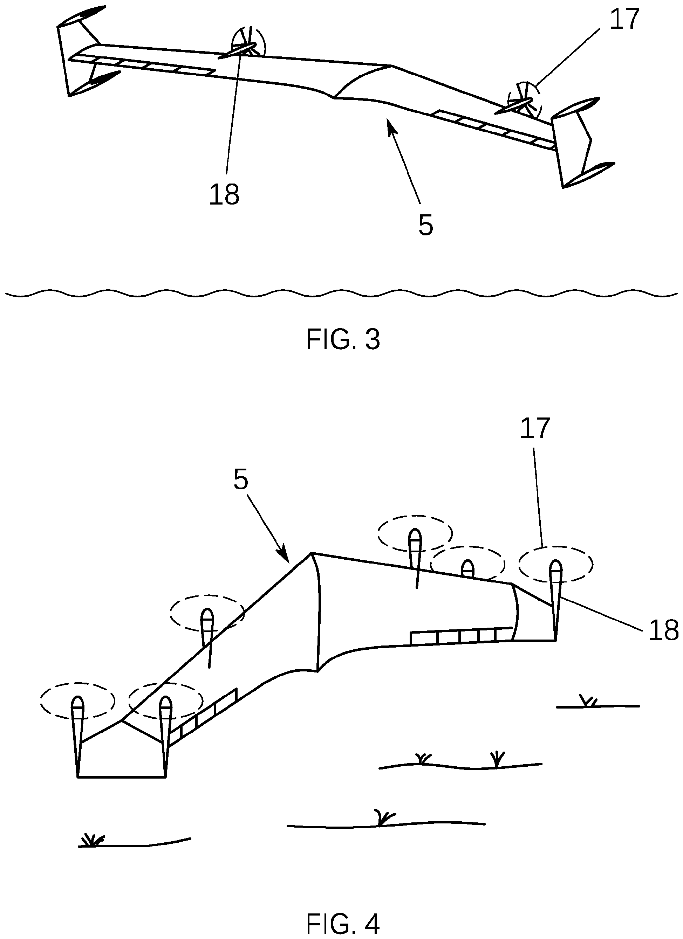

In Fig. 3 befindet sich das Fluggerät 5 im zweiten Betriebsmodus. In diesem Betriebsmodus ist das Fluggerät 5 vom Zugseil 4 abgekoppelt und kann z.B. zu einer Wartungsstation 20 fliegen und anschließend dort landen. Dieser Flugmodus stellt zudem eine Sicherheitseinrichtung für den Fall eines Risses des Zugseils 4 dar. In diesem Fall kann das Fluggerät 5 ebenfalls z.B. zur Wartungsstation 20 fliegen. Es ist auch denkbar, dass dieser Flugmodus beim Austausch einer Basisstation 3 verwendet wird. Bei einem Austausch einer Basisstation 3 kann das Fluggerät 5 abgekoppelt vom Zugseil 4 z.B. Kreisbahnen fliegen, um anschließend die Verbindung zum Zugseil 4 der ausgetauschten Basisstation 3 wieder herzustellen. In diesem Betriebsmodus kann das Fluggerät 5 auch bei extremen Wetterbedingungen zur Sicherung z.B. ans Festland fliegen und dort landen. Aufgrund der guten aerodynamischen Gleiteigenschaften des Fluggerätes 5 wird für den aktiven Streckenflug nur ein Teil der Propeller 18 des Propellersystems 19 benötigt. Aufgrund des verringerten Luftwiderstandes, der durch die an die Fluggerätsstruktur aerodynamisch angelegten Propellerblätter erreicht wird, erhöht sich die Reichweite des Fluggeräts im Vergleich zum dritten VTOL-Betriebsmodus. Zum Beispiel können beim Streckenflug nur zwei von z.B. sechs Propellern 18 des Propellersystems 19 eingesetzt werden. Der selbstständige Flug kann durch eine autarke Flugsteuereinheit mit einer GPS-gestützten Zielführung an Bord des Fluggerätes 5 erfolgen. In einem weiteren Beispiel kann entweder die Basisstation 3 und/oder die Wartungsstation 20 eine Flugsteuereinheit aufweisen, die über eine Funkverbindung zum Fluggerät 5 die Flugmanöver des Fluggeräts 5 unter Verwendung der GPS-Position des Fluggeräts 5 kontrolliert. In einem weiteren Beispiel kann über eine Funkverbindung zu einer durch Wartungspersonal besetzten Bodenkontrollstation das Fluggerät ferngesteuert ebenfalls unter Verwendung der GPS-Position des Fluggeräts 5 an den gewünschten Ort geflogen und dort gelandet bzw. gestartet werden.

In Fig. 4 befindet sich das Fluggerät 5 im dritten Betriebsmodus bei dem das Fluggerät 5 vertikal oder nahezu vertikal manövrieren, landen und starten kann. Dieser Flugmodus ist vergleichbar mit der Flugart eines Quadrokopters bzw. einem VTOL-Flugmodus. Dadurch ist es möglich das Fluggerät 5 z.B. in einem windgeschützten Bereich oder einem Fangnetz in oder auf der Wartungsstation 20 zu landen. Es werden keine großen Landeplätze benötigt.

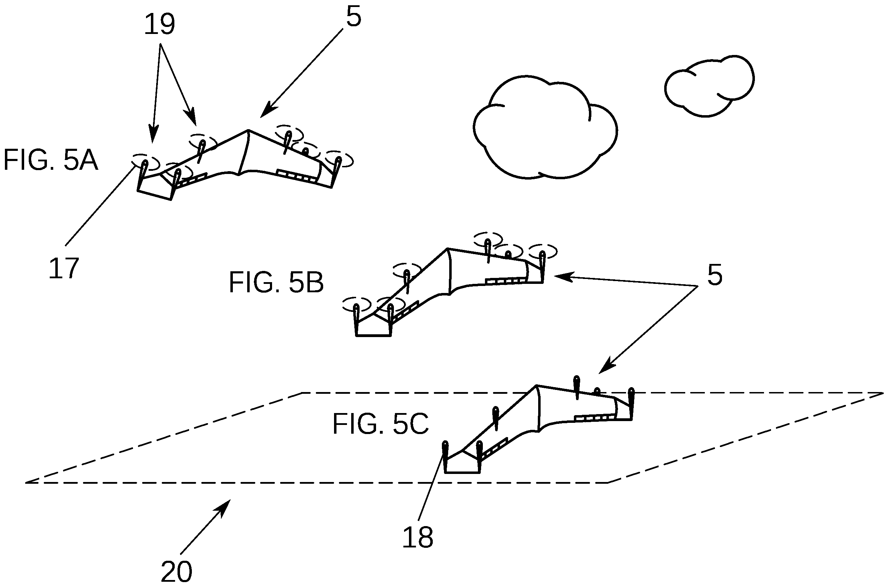

Wie aus Fig. 5A bis C hervorgeht sind drei verschiedene Flugphasen beim Übergang vom zweiten Betriebsmodus (Fluggerät 5 fliegt abgekoppelt vom Zugseil 4) in den dritten Betriebsmodus (Fluggerät 5 fliegt ähnlich wie ein Quadrokopter) gezeigt. In Fig. 5A befindet sich das bereits zur Erdoberfläche geneigte Fluggerät 5 im Übergang vom horizontalen Flug, was dem zweiten Betriebsmodus entspricht, in den vertikalen Flug, der den dritten Betriebsmodus darstellt. In Figur 5B befindet sich das Fluggerät 5 im dritten Betriebsmodus, es fliegt vertikal und landet. In Fig. 5C ist das Fluggerät 5 auf dem Boden gelandet. Sowohl beim Übergang vom horizontalen Flug in den vertikalen Flug in Fig. 5A als auch beim rein vertikalen Fliegen in Fig. 5B werden üblicherweise alle Propeller 18 des Propellersystems 19 verwendet. Der Übergang vom zweiten in den dritten Betriebsmodus, sowie das Fliegen im dritten Betriebsmodus und das Starten und das Landen kann vollautomatisch durch eine Flugsteuereinheit an Bord des Fluggerätes 5 erfolgen. In einem weiteren Beispiel kann die Steuerung des Fluggerätes 5 durch eine Flugsteuereinheit zum Beispiel in der Basisstation 3 und/oder der Wartungsstation 20 über Funk erfolgen. In einem weiteren Beispiel kann eine Fernsteuerung über eine Bodenkontrollstation durch das Wartungspersonal erfolgen.

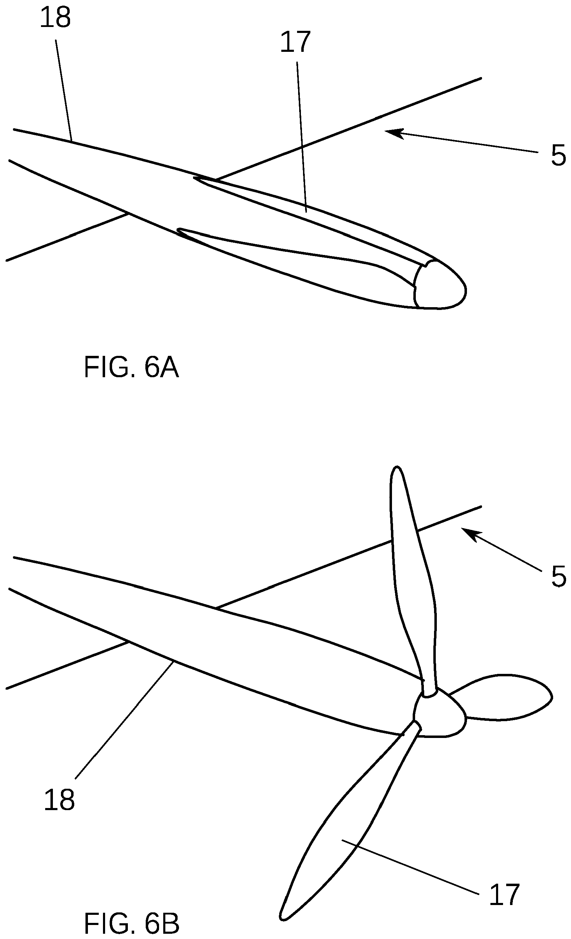

Wie aus Fig. 6A und B hervorgeht ist ein Propeller 18 des Propellersystems 19 in zwei verschiedenen Zuständen gezeigt. In Figur 6A sind die Propellerblätter 17 des Propellers 18 eingeklappt, d.h. aerodynamisch an die Fluggerätstruktur angelegt. Dies ist der normale Zustand, in dem sich jeder Propeller 18 befindet, wenn das Fluggerät 5 im ersten Betriebsmodus geschlossene Flugmuster 14 fliegt. Im zweiten Betriebsmodus können ebenfalls die Propellerblätter 17 von einem Teil der Propeller 18 des Propellersystems 19 eingeklappt sein. Dies verbessert die aerodynamischen Gleiteigenschaften des Fluggerätes 5, während ein anderer Teil mit ausgeklappten Propellern 18, wie z.B. in Figur 6B gezeigt, für aktiven Vortrieb des Fluggerätes 5 sorgt. Aufgrund der guten Gleiteigenschaften des Fluggeräts 5 kann so ein effizienter Streckenflug erreicht werden. Im dritten Betriebsmodus sind üblicherweise alle Propellerblätter 17 ausgeklappt und das Propellersystem 19 wird komplett für den vertikalen Flug verwendet.

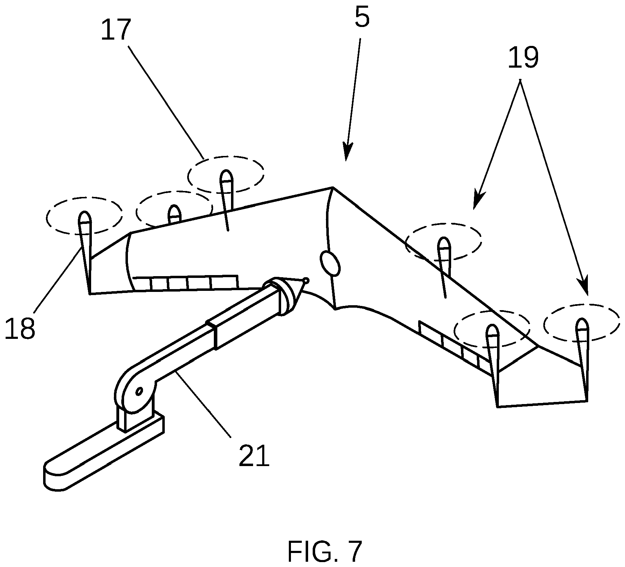

Wie aus Fig. 7 hervorgeht befindet sich das Fluggerät 5 in einer An- oder Abkuppelphase an einem Haltearm 21. Dieses An- oder Abkuppeln wird im dritten VTOL-Betriebsmodus durchgeführt. Desweiteren erlaubt dieser Betriebsmodus die für das An- und Abkuppeln notwendige hohe und präzise Manövrierbarkeit auf engem Raum. Der in Fig. 7 dargestellte Haltearm 21 kann z.B. Teil einer Wartungsstation 20 z.B. auf dem Festland oder auf einem Schiff sein. Der An- bzw. Abkuppelvorgang kann z.B. zu Wartungszwecken oder anderen besonderen Zwecken durchgeführt werden.

**Bezugszeichenliste**

| | |
|---|---|
| 1 | Generatorsystem |
| 2 | Winde |
| 3 | Basisstation |
| 4 | Zugseil |
| 5 | Fluggerät |
| 6 | Aufnahmevorrichtung |
| 7 | Kupplungskörperoberteil |
| 8 | Kupplungskörper |
| 9 | Kupplungskörperunterteil |
| 10 | Verbindungsleitung |
| 11 | Sammelleitung |
| 12 | Meeresboden |
| 13 | Halteseil |
| 14 | Flugmuster |
| 15 | Steigflug |
| 16 | Sinkflug |
| 17 | Propellerblätter |
| 18 | Propeller |
| 19 | Propellersystem |
| 20 | Wartungsstation |
| 21 | Haltearm |

## Patentansprüche

1. Offshore-Höhenwindkraftanlage mit
- mindestens einer schwimmfähigen Basisstation (3), die mit einer Verbindungsleitung (10) an einer Sammelleitung (11) am Meeresboden (12) elektrisch verbunden ist,
- einem Fluggerät (5) mit starren Tragflächen und einem Propellersystem (19) mit Propellern (18), die dazu eingerichtet sind das Fluggerät (5) im Flug aktiv vorantreiben zu können,
**dadurch gekennzeichnet, dass**
- ein Generatorsystem (1) auf der Basisstation (3) vorgesehen ist, mit einem Generator mit einer Winde (2), die dazu eingerichtet ist, ein Zugseil (4) aufzurollen, und die durch ihre Drehung beim Abrollen des Zugseils (4) den Generator antreibt, welcher die Drehbewegung der Winde (2) in eine andere Energieform umwandelt;
- das Fluggerät (5) in einem ersten Betriebsmodus mit dem Zugseil (4) mit der Winde (2) verbunden ist und dazu eingerichtet ist geschlossene Flugmuster (14) zu fliegen, um den Generator anzutreiben; und
- das Fluggerät (5) in einem zweiten Betriebsmodus dazu eingerichtet ist, vom Zugseil (4) abgekoppelt eine festgelegte Flugstrecke abfliegen zu können und an mindestens einem festgelegten Ziel landen zu können, wobei mindestens eines der Ziele eine von der Basisstation (3) räumlich getrennte Wartungsstation (20) ist.

2. Offshore-Höhenwindkraftanlage nach Anspruch 1, wobei das Fluggerät (5) in seinem zweiten Betriebsmodus dazu eingerichtet ist, abgekoppelt vom Zugseil (4) fliegen zu können und selbstständig von der Wartungsstation (20) zu einer Basisstation (3) fliegen und darauf landen zu können.

3. Offshore-Höhenwindkraftanlage nach Anspruch 1, wobei das Fluggerät (5) und die Basisstation (3) eingerichtet sind, bei Erreichen der Basisstation durch das Fluggerät selbstständig eine Verbindung zwischen dem Fluggerät (5) und dem Zugseil (4) des Generatorsystems (1) herstellen zu können.

4. Offshore-Höhenwindkraftanlage nach Anspruch 1, wobei jeder Propeller (18) eine Mehrzahl von Propellerblättern (17) hat, die einklappbar sind.

5. Offshore-Höhenwindkraftanlage nach Anspruch 1, wobei das Fluggerät (5) so eingerichtet ist, dass es in einem dritten Betriebsmodus in einer vertikalen oder nahezu vertikalen Richtung fliegen, landen und starten kann.

6. Offshore-Höhenwindkraftanlage nach Anspruch 1, wobei die Verbindungsleitung (10) an seinem basisstationsseitigem Ende in einen Kupplungskörper (8) geführt ist, und die Basisstation (3) eine Aufnahmevorrichtung (6) aufweist, die zur Aufnahme und Fixierung mindestens eines Teils des Kupplungskörpers (8) eingerichtet ist.

7. Offshore-Höhenwindkraftanlage nach Anspruch 6, wobei bei Aufnahme eines Teils des Kupplungskörpers (8) in der Aufnahmevorrichtung (6) der Basisstation (3) eine leitende Verbindung zwischen der Verbindungsleitung (10) und der dem Generator (3) hergestellt ist.

8. Offshore-Höhenwindkraftanlage nach Anspruch 7, wobei der Kupplungskörper (8) zweigeteilt ist mit einem Kupplungskörperoberteil (7), das die Verbindung zwischen der Verbindungsleitung (10) und der Basisstation (3) herstellt, und einem Kupplungskörperunterteil (9), das über eine Haltevorrichtung am Meeresboden (12) verankert ist, wobei das Kupplungskörperoberteil (7) gegen das Kupplungskörperunterteil (9) frei drehbar ist.

9. Offshore-Höhenwindkraftanlage nach Anspruch 8, wobei die Haltevorrichtung mindestens ein Halteseil (13) aufweist.

10. Offshore-Höhenwindkraftanlage nach Anspruch 1, wobei das Zugseil (4) Polyethylen-Fasern mit ultrahoher molarer Masseaufweist.

11. Offshore-Höhenwindkraftanlage nach Anspruch 1, wobei die Basisstation (3) ein Energiespeicherelement aufweist, das mit dem Generatorsystem (1) und der Verbindungsleitung (10) verbunden ist, und das dazu eingerichtet ist, die vom Generatorsystem (1) umgewandelte Energie zwischen zu speichern.

## Claims

1. Offshore altitude wind power unit with
- at least one floatable base station (3), which is electrically connected to a connecting line (10) on a manifold (11) on the seabed (12),
- an aircraft (5) with rigid wings and a propeller system (19) having propellers (18) adapted to actively propel the aircraft (5) in flight,
**characterized in that**
- a generator system (1) is provided on the base station (3), with a generator with a winch (2) that is adapted to roll up a traction cable (4) and that by its rotation when the traction cable (4) unrolls drives the generator which converts the rotation of the winch (2) into another form of energy;
- the aircraft (5) is in a first mode of operation connected to the traction cable (4) with the winch (2) and adapted to fly closed flight patterns (14) in order to drive the generator; and
- the aircraft (5) is in a second mode of operation adapted to be able to fly decoupled from the traction cable (4) a predetermined flight route and to land at least at one predetermined destination, wherein at least one of the destinations is a maintenance station (20) that is spatially separated from the base station (3).

2. Offshore altitude wind power unit according to claims 1, wherein the aircraft (5) is in its second mode of operation adapted to be able to fly decoupled from the traction cable (4) and to fly autonomously from the maintenance station (20) to the base station (3) and to land thereon.

3. Offshore altitude wind power unit according to claim 1, wherein the aircraft (5) and the base station (3) are adapted to be able to establish a connection between the aircraft (5) and the traction cable (4) of the generator system (1) in an autonomous manner when reaching the base station.

4. Offshore altitude wind power unit according to claim 1, wherein each propeller (18) has a plurality of propeller blades (17) which are foldable.

5. Offshore altitude wind power unit according to claim 1, wherein the aircraft (5) is adapted to be able to fly, land and take off in a vertical or almost vertical direction in a third mode of operation.

6. Offshore altitude wind power unit according to claim 1, wherein the connecting line (10) is guided in a coupling body (8) at its base station side end, and the base station (3) comprises a receiving device (6) which is adapted for receiving and fixing at least a part of the coupling body (8).

7. Offshore altitude wind power unit according to claim 6, wherein a conductive connection is established between the connecting line (10) and the generator (3) when a part of the coupling body (8) is received in the receiving device (6) of the base station (3).

8. Offshore altitude wind power unit according to claim 7, wherein the coupling body (8) is divided into two parts with a coupling body upper part (7) that establishes the connection between the connecting line (10) and the base station (3), and a coupling body lower part (9) that is anchored to the seabed (12) with a holding device, wherein the coupling body upper part (7) is freely rotatable against the coupling body lower part (9).

9. Offshore altitude wind power unit according to claim 8, wherein the holding device has at least one tether (13).

10. Offshore altitude wind power unit according to claim 1, wherein the traction cable (4) comprises polyethylene fibers with ultra-high molar mass.

11. Offshore altitude wind power unit according to claim 1, wherein the base station (3) comprises an energy storage element connected to the generator system (1) and the connecting line (10) and adapted to temporarily store the energy converted by the generator system (1).

## Revendications

1. Éolienne offshore avec
- au moins une station de base (3) flottante, qui est reliée électriquement avec une ligne de liaison (10) à une conduite collectrice (11) au fond de la mer (12),
- un engin volant (5) avec des ailes rigides et un système d'hélices (19) avec des hélices (18), qui sont aménagées pour pouvoir faire avancer activement l'engin volant (5) en vol,
**caractérisée en ce que**
- un système de générateur (1) est prévu sur la station de base (3), avec un générateur avec un treuil (2), qui est aménagé pour dérouler un câble de traction (4), et qui entraîne par sa rotation lors du déroulement du câble de traction (4) le générateur, lequel convertit le mouvement de rotation du treuil (2) en une autre forme d'énergie ;
- l'engin volant (5) est relié dans un premier mode de fonctionnement avec le câble de traction (4) au treuil (2) et est aménagé pour voler des trajectoires de vol fermées (14) pour entraîner le générateur ; et
- l'engin volant (5) est aménagé dans un deuxième mode de fonctionnement pour pouvoir, découplé du câble de traction (4), voler sur un itinéraire de vol défini et pouvoir atterrir à au moins une destination définie, dans laquelle au moins une des destinations est une station de maintenance (20) séparée spatialement de la station de base (3).

2. Éolienne offshore selon la revendication 1, dans laquelle l'engin volant (5) est aménagé dans son deuxième mode de fonctionnement pour pouvoir voler découplé du câble de traction (4) et pouvoir voler de manière autonome de la station de maintenance (20) à une station de base (3) et pouvoir y atterrir.

3. Éolienne offshore selon la revendication 1, dans laquelle l'engin volant (5) et la station de base (3) sont aménagés pour pouvoir établir, lorsque la station de base est atteinte par l'engin volant, de manière autonome une liaison entre l'engin volant (5) et le câble de traction (4) du système de générateur (1).

4. Éolienne offshore selon la revendication 1, dans laquelle chaque hélice (18) a une pluralité de pales d'hélice (17), qui sont rabattables.

5. Éolienne offshore selon la revendication 1, dans laquelle l'engin volant (5) est aménagé de telle sorte qu'il puisse voler, atterrir et décoller dans un troisième mode de fonctionnement dans une direction verticale ou pratiquement verticale.

6. Éolienne offshore selon la revendication 1, dans laquelle la ligne de liaison (10) est guidée au niveau de son extrémité côté station de base dans un corps de couplage (8), et la station de base (3) présente un dispositif de réception (6), qui est aménagé pour la réception et la fixation d'au moins une partie du corps de couplage (8).

7. Éolienne offshore selon la revendication 6, dans laquelle lors de la réception d'une partie du corps de couplage (8) dans le dispositif de réception (6) de la station de base (3), une liaison conductrice est établie entre la ligne de liaison (10) et le générateur (3).

8. Éolienne offshore selon la revendication 7, dans laquelle le corps de couplage (8) est divisé en deux avec une partie supérieure de corps de couplage (7), qui établit la liaison entre la ligne de liaison (10) et la station de base (3), et une partie inférieure de corps de couplage (9), qui est ancrée au fond de la mer par le biais d'un dispositif de retenue (12), dans laquelle la partie supérieure de corps de couplage (7) est librement rotative par rapport à la partie inférieure de corps de couplage (9).

9. Éolienne offshore selon la revendication 8, dans laquelle le dispositif de retenue présente au moins un câble de retenue (13).

10. Éolienne offshore selon la revendication 1, dans laquelle le câble de traction (4) présente des fibres de polyéthylène de masse molaire ultra-élevée.

11. Éolienne offshore selon la revendication 1, dans laquelle la station de base (3) présente un élément d'accumulation d'énergie, qui est relié au système de générateur (1) et à la ligne de liaison (10), et qui est aménagé pour stocker temporairement l'énergie transformée par le système de générateur (1).
